(19) **Europäisches Patentamt / European Patent Office / Office européen des brevets**

(11) **EP 2 197 083 A2**

(12) **EUROPÄISCHE PATENTANMELDUNG**

(43) Veröffentlichungstag:
**16.06.2010 Patentblatt 2010/24**

(51) Int Cl.:
***H02J 3/26*** *(2006.01)*

(21) Anmeldenummer: **09173103.4**

(22) Anmeldetag: **15.10.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **01.12.2008 DE 102008060406**

(71) Anmelder: **SIEMENS AKTIENGESELLSCHAFT 80333 München (DE)**

(72) Erfinder: **Neisius, Hans-Theo 90556, Seukendorf (DE)**

(54) **Verfahren zur Modellierung einer Transformatoranordnung**

(57) Um ein Verfahren anzugeben, mit dem eine Modellierung verschiedenster Transformatoranordnungen in symmetrischen oder unsymmetrischen Energieversorgungsnetzen mit vergleichsweise niedrigem Aufwand durchgeführt werden kann, wird ein solches Verfahren vorgeschlagen, bei dem folgende Schritte ausgeführt werden:
- Erzeugen einer zumindest eine Admittanzmatrix umfassenden Kopplungsmatrix aus Admittanzparametern der Transformatoranordnung, wobei die Kopplungsmatrix, die Admittanzmatrix und die Admittanzparameter in symmetrischen Komponenten eines Dreiphasensystems dargestellt werden;
- Berechnen der Modellierung der Transformatoranordnung in symmetrischen Komponenten des Dreiphasensystems, wobei die Modellierung eine mathematische Beschreibung der Abhängigkeit von Strömen und Spannungen auf beiden Seiten der Transformatoranordnung angibt; und
- Umsetzung der auf die symmetrischen Komponenten des Dreiphasensystems bezogenen Modellierung der Transformatoranordnung in eine jeweils auf die einzelnen Phasen des Dreiphasensystems bezogene Modellierung der Transformatoranordnung.
Die Erfindung betrifft auch eine entsprechend eingerichtete Datenverarbeitungseinrichtung.

FIG 1

EP 2 197 083 A2

**Beschreibung**

Zur Auslegung und Steuerung von elektrischen Energieversorgungsnetzen ist eine Vielzahl von Berechungen zur Modellierung der einzelnen Komponenten des elektrischen Energieversorgungsnetzes vonnöten. Eine besondere Schwierigkeit besteht hierbei bei der Modellierung von Transformatoren oder Transformatorbänken, d.h. Transformatoranordnungen, bei denen für jede Phase des elektrischen Energieversorgungsnetzes ein separater Transformator mit eigenem Transformatorkern vorhanden ist. Solche zusammengefasst als Transformatoranordnungen bezeichneten Komponenten weisen nämlich üblicherweise verschiedenste Arten von Schaltgruppen auf, die sich unterschiedlich auf die Modellierung auswirken. Eine Schaltgruppe eines Transformators setzt sich zusammen aus dem Windungstyp der Wicklungen an beiden Seiten des Transformators (sogenannte Z-, D- oder Y-Wicklungen) sowie der Erdung der Sternpunkte bei Z- oder Y-Wicklungen. Die jeweilige Konfiguration kann hierbei für jede Seite der Transformatoranordnung unterschiedlich gewählt sein.

Eine weitere Schwierigkeit der Modellierung von Transformatoranordnungen entsteht bei einer unsymmetrischen Belastung oder einem unsymmetrischen Aufbau des Energieversorgungsnetzes. Dies bedeutet, dass nicht jede Phase der Transformatoranordnung gleichermaßen mit elektrischen Lasten beaufschlagt ist, sondern eine unregelmäßige, daher "unsymmetrische", Lastverteilung vorliegt. Bei unsymmetrischen Zuständen können beispielsweise folgende Bedingungen zu berücksichtigen sein:

- die Impedanzen der einzelnen Phasen der Transformatoranordnung können sich unterscheiden;
- das Übersetzungsverhältnis des Transformators kann für jede Phase unterschiedlich ausfallen, wenn eine Spannungsregelung pro Phase vorgenommen wird;
- 3-Phasen Transformatoren können unvollständig belegt sein.

Bei unsymmetrischen Lastverteilungen wird bisher üblicherweise eine Berechnung der Modellierung im sogenannten "Phasenmodell" vorgenommen, d.h. jede Phase wird für sich genommen berechnet. Bei Berechnungen im Phasenmodell bestehen jedoch starke Kopplungen zwischen den einzelnen Phasen einer Transformatoranordnung, die sich auf die zu berücksichtigenden Admittanzen (inverse Form der Impedanzen) auswirken. Diese Kopplungen gehen unter anderem auf die unterschiedlichen Schaltgruppen der jeweiligen zu modellierenden Transformatoranordnungen zurück. Zum Zwecke der Modellierung im Phasenmodell werden die Kopplungen üblicherweise in Form von Kopplungsmatrizen (sogenannten "Connectivity Matrices") berücksichtigt; diese müssen jedoch für jede Schaltgruppe individuell ermittelt werden. Die verschiedenen Kopplungsmatrizen werden für die Modellierung normalerweise in Datenbanken vorgehalten oder in die Modellierungssoftware fest einprogrammiert. Bisher noch nicht erfasste Schaltgruppen lassen sich daher in eine bestehende Modellierung nur mit großem Aufwand einbringen. Zusätzlich erhöht sich der Pflegeaufwand des Modellierungssystems bei steigender Anzahl von unterschiedlichen Schaltgruppen.

Aufgabe der vorliegenden Erfindung ist es, ein Verfahren anzugeben, mit dem eine Modellierung verschiedenster Transformatoranordnungen in symmetrischen oder unsymmetrischen Energieversorgungsnetzen mit vergleichsweise niedrigem Aufwand durchgeführt werden kann.

Zur Lösung dieser Aufgabe wird ein Verfahren zur Modellierung einer Transformatoranordnung eines elektrischen Energieversorgungsnetzes vorgeschlagen, bei dem aus Admittanzparametern der Transformatoranordnung eine zumindest eine Admittanzmatrix umfassende Kopplungsmatrix erzeugt wird, wobei die Kopplungsmatrix, die Admittanzmatrix und die Admittanzparameter in symmetrischen Komponenten eines Dreiphasensystems dargestellt werden; die Modellierung der Transformatoranordnung wird in symmetrischen Komponenten des Dreiphasensystems berechnet, wobei die Modellierung eine mathematische Beschreibung der Abhängigkeit von Strömen und Spannungen auf beiden Seiten der Transformatoranordnung angibt, und die auf die symmetrischen Komponenten des Dreiphasensystems bezogene Modellierung der Transformatoranordnung wird in eine jeweils auf die einzelnen Phasen des Dreiphasensystems bezogene Modellierung der Transformatoranordnung umgesetzt.

Der Erfindung liegt die Erkenntnis zugrunde, dass die Kopplungen zwischen den einzelnen Phasen der Transformatoranordnung in einer auf symmetrische Komponenten (d.h. auf das Null-, Mit- und Gegensystem) des Dreiphasensystems bezogenen Darstellung nicht oder nur sehr vermindert auftreten, wodurch eine Berechnung deutlich vereinfacht wird. Daher wird die Kopplungsmatrix, mit der die Kopplungen in der Modellierung beschrieben werden, in symmetrischen Komponenten aufgestellt. Im einfachsten Fall sind hierbei keinerlei Kopplungen zwischen dem Null-, Mit- und Gegensystem der Transformatoranordnung gegeben und die Beschreibung in symmetrischen Komponenten ist besonders leicht und direkt aus den Betriebsmitteldaten der Transformatoranordnung ableitbar. Für Transformatorbänke, die im Verteilnetz häufig aus stark unterschiedlichen Einzeltransformatoren aufgebaut sein können, können die Admittanzen in symmetrischen Komponenten ebenfalls aufgestellt werden. Die Kopplungen zwischen Null-, Mit- und Gegensystem, die in diesem Fall vorhanden sind, sind jedoch leicht zu berechnen und von der jeweiligen Schaltgruppe der Transformatoranordnung unabhängig.

Der besondere Vorteil des erfindungsgemäßen Verfahrens besteht nicht nur darin, dass die Ermittlung der Admittanzen sowie der Admittanzmatrix in symmetrischen Komponenten leichter möglich ist, sondern insbesondere auch darin, dass sie generisch aus gegebenen elektrischen Daten der Transformatoranordnung erzeugt werden können. Das beschriebene Verfahren kann daher für alle Schaltgruppen in symmetrischen oder unsymmetrischen Systemen verwendet werden. Sogar unvollständig belegte Dreiphasentransformatoren lassen sich durch dieses Verfahren einfacher modellieren. Außerdem kann die Berücksichtigung der Erdung der neutralen Sternpunkte leichter erfolgen. Hierzu muss lediglich eine Unterscheidung zwischen D-Wicklungen (keine Erdung möglich) und Y- bzw. Z-Wicklungen (hier sind die Fälle "keine Erdung", "starre" oder "impedanzbehaftete Erdung" zu unterscheiden) getroffen werden.

Für den Fall, dass die Admittanzparameter der Transformatoranordnung nicht in symmetrischen Komponenten bekannt sind, wird als vorteilhafte Weiterbildung des Verfahrens vorgeschlagen, dass zur Bestimmung der auf symmetrische Komponenten des Dreiphasensystems bezogenen Admittanzparameter der Transformatoranordnung die auf die einzelnen Phasen des Dreiphasensystems bezogenen Admittanzparameter der Transformatoranordnung ermittelt und in die auf die symmetrischen Komponenten des Dreiphasensystems bezogenen Admittanzparameter umgesetzt werden.

Besonders vorteilhaft kann das erfinderische Verfahren zur die Modellierung von Transformatorbänken, unsymmetrisch belasteten Transformatoren oder einen unvollständig belegten 3-Phasen-Transformatoren eingesetzt werden, da bei diesen Transformatoranordnungen deutliche Kopplungen zwischen den einzelnen Phasen auftreten.

Die oben genannte Aufgabe wird auch durch eine Datenverarbeitungseinrichtung zur Modellierung einer Transformatoranordnung eines elektrischen Energieversorgungsnetzes gelöst, die dazu eingerichtet ist, ein Verfahren gemäß einer der vorangehend beschriebenen Ausführungsformen durchzuführen.

Die Erfindung wird im Folgenden anhand von Ausführungsbeispielen näher erläutert. Hierzu zeigen

Figur 1    ein schematisches Verfahrensfließbild;

Figur 2    eine auf die jeweiligen Phasen bezogene Modellierung einer 3-phasigen Transformatoranordnung; und

Figur 3    eine auf die symmetrischen Komponenten bezogene Modellierung einer 3-phasigen Transformatoranordnung mit einer YD-Schaltgruppe.

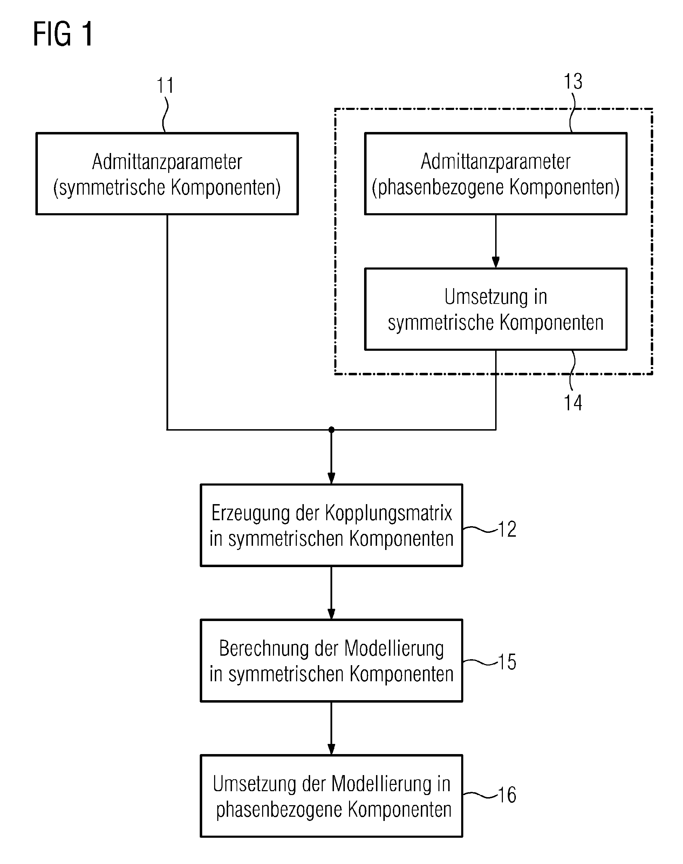

Figur 1 zeigt eine Ausführungsform eines Verfahrens zur Modellierung einer Transformatoranordnung. Sofern gemäß Schritt 11 die Admittanzen der Transformatoranordnung aus ihren Betriebsmitteldaten, die üblicherweise vom Hersteller der Transformatoranordnung angegeben werden, bereits in der Form von symmetrischen Komponenten, also bzgl. Null-, Mit- und Gegensystem vorliegen, können diese in Schritt 12 direkt zur Erzeugung einer Kopplungsmatrix, die zumindest eine Admittanzmatrix umfasst, in symmetrischen Komponenten verwendet werden. Neben der Admittanzmatrix kann die Kopplungsmatrix auch eine Spannungsübersetzungsmatrix (siehe unten) umfassen.

Falls alternativ - in Figur 1 durch einen gestrichelten Kasten angedeutet - die Admittanzen gemäß Schritt 13 nur im Phasenmodell bekannt sein sollten, werden diese zunächst gemäß Schritt 14 in symmetrische Komponenten umgerechnet.

Die Berücksichtigung sowohl der Erdung der neutralen Sternpunkte als auch der Übersetzungsverhältnisse der Transformatoranordnung, worin sich die Schaltgruppe widerspiegelt, ist in symmetrischen Komponenten nicht nur einfacher möglich; vielmehr kann die Modellierung der Transformatoranordnung gemäß Schritt 15 auch mit einem generischen Ansatz, der für alle Schaltgruppen angewendet werden kann, erfolgen. Dies reduziert den Erstellungsaufwand sowie den Aufwand für Pflege und Bereitstellung der Transformatormodelle erheblich.

Die fertige Modellierung der Transformatoranordnung in symmetrischen Komponenten wird anschließend gemäß Schritt 16 in das Phasenmodell umgesetzt, in dem die erforderlichen phasenbezogenen Berechungen stattfinden können.

Zum besseren Verständnis des beschriebenen Verfahrens soll im Folgenden nochmals eine Zusammenfassung der Umwandlung von phasenbezogenen Komponenten in symmetrische Komponenten dargestellt werden.

Eine Modellierung für Transformatoranordnungen eines Einphasen-Systems kann in einer Admittanz-bezogenen Schreibweise normalerweise entsprechend Gleichung dargestellt werden:

$$\begin{bmatrix} \underline{Y}_{C_h} + \dfrac{\underline{Y}_{E_h}}{2} & -\underline{t}^* \underline{Y}_{C_h} \\ -\underline{t}^* \underline{Y}_{C_h} & \underline{t}^2 \left( \underline{Y}_{C_h} + \dfrac{\underline{Y}_{E_h}}{2} \right) \end{bmatrix} \begin{bmatrix} \underline{U}_1 \\ \underline{U}_2 \end{bmatrix} = \begin{bmatrix} \underline{I}_1 \\ \underline{I}_2 \end{bmatrix} \tag{1}$$

Hierbei bedeuten:

$V_1$    Phasenspannung auf Seite 1 der Transformatoranordnung;
$V_2$    Phasenspannung auf Seite 2 der Transformatoranordnung;
$I_1$    Phasenstrom auf Seite 1 der Transformatoranordnung;
$I_2$    Phasenstrom auf Seite 2 der Transformatoranordnung;
$\underline{y}$    komplexe Admittanz (Cu - Kupfer, Fe - Eisen).

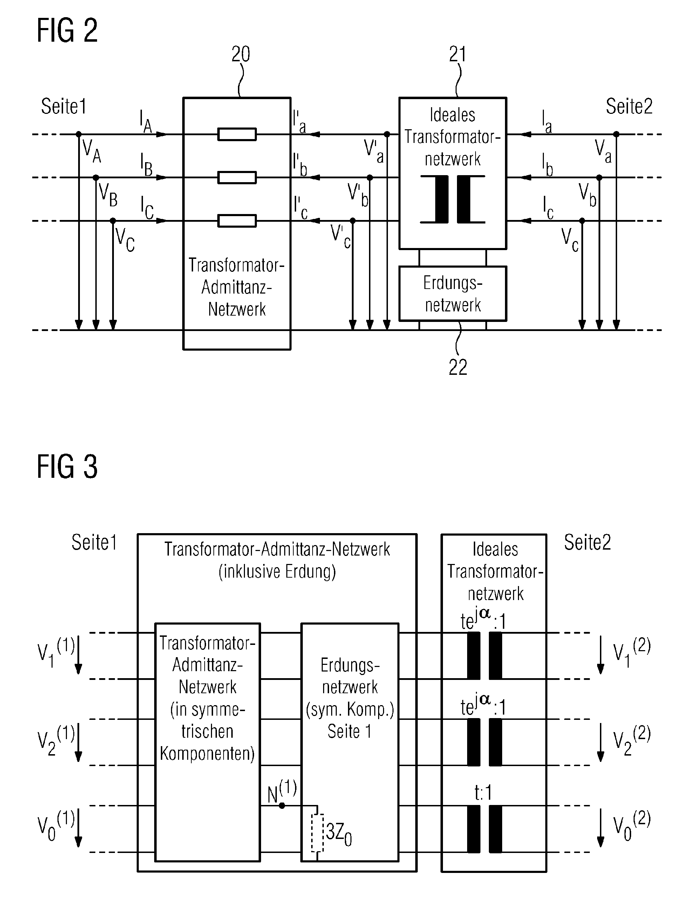

Bei einem Dreiphasensystem (vergleiche auch Figur 2) erweitert sich die Darstellung im Phasenmodell entsprechend Gleichung (2) bzw. Gleichung (3):

$$\begin{bmatrix} \underline{Y}_{11}^{(ABC)} & \underline{Y}_{12}^{(ABC)} T^{(ABC)} \\ T^{(ABC)t} \underline{Y}_{21}^{(ABC)} & T^{(ABC)t} \underline{Y}_{22}^{(ABC)} T^{(ABC)} \end{bmatrix} \begin{bmatrix} \underline{V}_1^{(ABC)} \\ \underline{V}_2^{(ABC)} \end{bmatrix} = \begin{bmatrix} \underline{I}_1^{(ABC)} \\ \underline{I}_2^{(ABC)} \end{bmatrix} \qquad (2)$$

$$\begin{bmatrix} I & 0 \\ 0 & T^{(ABC)t} \end{bmatrix} \begin{bmatrix} \underline{Y}_{11}^{(ABC)} & \underline{Y}_{12}^{(ABC)} \\ \underline{Y}_{21}^{(ABC)} & \underline{Y}_{22}^{(ABC)} \end{bmatrix} \begin{bmatrix} I & 0 \\ 0 & T^{(ABC)} \end{bmatrix} \begin{bmatrix} \underline{V}_1^{(ABC)} \\ \underline{V}_2^{(ABC)} \end{bmatrix} = \begin{bmatrix} \underline{I}_1^{(ABC)} \\ \underline{I}_2^{(ABC)} \end{bmatrix} \qquad (3)$$

Hierbei bedeuten:

$\underline{V}_i^{(ABC)}$    Phasenspannung auf Seite i in Phasenkoordinaten;
$\underline{I}_i^{(ABC)}$    Phasenstrom auf Seite i in Phasenkoordinaten;
$\underline{Y}_{ij}^{(ABC)}$    Admittanzmatrix in Phasenkoordinaten;
$T^{(ABC)}$    Spannungsübersetzungsmatrix in Phasenkoordinaten entsprechend der Schaltgruppe der Transformatoranordnung;
$T^{(ABC)t}$    transponierte Spannungsübersetzungsmatrix;
$(ABC)$    Indikator für die jeweilige Phase.

Hierbei ist es wichtig zu erwähnen, dass die reinen Admittanzmatrixen $\underline{Y}_{ij}^{(ABC)}$ nicht von der Schaltgruppe abhängig sind. Die Admittanzen als Admittanzparameter können durch einfache Tests (z.B. Kurzschlusstests) an der Transformatoranordnung bestimmt werden. Jedoch sind die Spannungsübersetzungsmatrizen $T^{(ABC)}$ in starker Weise abhängig von der jeweiligen Schaltgruppe der Transformatoranordnung. Für YY- und DD-Transformatoranordnungen besitzt diese Spannungsübersetzungsmatrix eine diagonale Form. Für alle anderen Schaltgruppen ist diese Spannungsübersetzungsmatrix verantwortlich für eine Verschiebung von Phasenwinkel und Amplitude auf beiden Seiten der Transformatoranordnung. Die Kopplungsmatrizen setzen sich zusammen aus den Admittanzmatrizen und den Spannungsübersetzungsmatrizen.

Beispielhaft ist in Gleichung (4) für eine YD5-Transformatoranordnung, die eine Spannungsverschiebung von 150° (=5*30°) vornimmt, ein mögliches Verhältnis zwischen den verketteten Phasenspannungen (Index ABC) auf Seite 1 (Y-Wicklung) und den Phase-Erde-Spannungen (Index na, nb, nc; n-neutral = Erde) auf Seite 2 (D-Wicklung) der Transformatoranordnung angegeben:

$$\begin{bmatrix} \underline{V}_A \\ \underline{V}_B \\ \underline{V}_C \end{bmatrix} = -t \begin{bmatrix} \underline{V}_{ab} \\ \underline{V}_{bc} \\ \underline{V}_{ca} \end{bmatrix} = -\frac{t}{3} \begin{bmatrix} 4 & -2 & 1 \\ 1 & 4 & -2 \\ -2 & 1 & 4 \end{bmatrix} \begin{bmatrix} \underline{V}_{na} \\ \underline{V}_{nb} \\ \underline{V}_{nc} \end{bmatrix} \qquad (4)$$

Die Admittanzmatrixen $\underline{Y}_{ij}^{(ABC)}$ in Gleichung (3) beinhalten diejenigen Kopplungen zwischen den drei Phasen, die nicht durch die Schaltgruppe verursacht sind. Normalerweise kann bei dreiphasigen Einkern-Transformatoren die Admittanzmatrix wie folgt dargestellt werden:

$$\underline{Y}_{ij}^{(012)} = \begin{bmatrix} \underline{Y}_{ij}^{(0)} & 0 & 0 \\ 0 & \underline{Y}_{ij}^{(1)} & 0 \\ 0 & 0 & \underline{Y}_{ij}^{(1)} \end{bmatrix} \quad ,$$

wobei (012) als Indikator für symmetrische Komponenten (0 - Nullsystem; 1 - Mitsystem; 2 - Gegensystem) verwendet wird.

In symmetrischen Komponenten (auch "012-Komponenten" genannt) kann die durch die verschiedenen Schaltgruppen hervorgerufene Phasenverschiebung viel einfacher als in Phasenkoordinaten modelliert werden. Bei der Anwendung von symmetrischen Komponenten kann Gleichung (2) in der Form der folgenden Gleichungen (5) bzw. (6) dargestellt werden:

$$\begin{bmatrix} \underline{Y}_{11}^{(012)} & \underline{Y}_{12}^{(012)}\underline{T}^{(012)} \\ \underline{T}^{(012)*}\underline{Y}_{21}^{(012)} & \underline{T}^{(012)*}\underline{Y}_{22}^{(012)}\underline{T}^{(012)} \end{bmatrix}\begin{bmatrix} \underline{V}_1^{(012)} \\ \underline{V}_2^{(012)} \end{bmatrix} = \begin{bmatrix} \underline{I}_1^{(012)} \\ \underline{I}_2^{(012)} \end{bmatrix} \quad (5)$$

$$\begin{bmatrix} 1 & 0 \\ 0 & \underline{T}^{(012)*} \end{bmatrix}\begin{bmatrix} \underline{Y}_{11}^{(012)} & \underline{Y}_{12}^{(012)} \\ \underline{Y}_{21}^{(012)} & \underline{Y}_{22}^{(012)} \end{bmatrix}\begin{bmatrix} 1 & 0 \\ 0 & \underline{T}^{(012)} \end{bmatrix}\begin{bmatrix} \underline{V}_1^{(012)} \\ \underline{V}_2^{(012)} \end{bmatrix} = \begin{bmatrix} \underline{I}_1^{(012)} \\ \underline{I}_2^{(012)} \end{bmatrix} \quad (6)$$

Hierbei bedeuten:

$\underline{V}_i^{(012)}$      Spannung auf Seite i in symmetrischen Komponenten;
$\underline{I}_i^{(012)}$      Strom auf Seite i in symmetrischen Komponenten;
$\underline{Y}_{ij}^{(012)}$      Admittanzmatrix in symmetrischen Komponenten;
$\underline{T}^{(012)}$      komplexe Spannungsübersetzungsmatrix in symmetrischen Komponenten;
$\underline{T}^{(012)*}$      konjugiert komplexe Spannungsübersetzungsmatrix;
(012)      Indikator für symmetrische Komponenten;
1      Einheitsmatrix;
0      Nullmatrix.

Der Unterschied zwischen Gleichung (2) und Gleichung (5) ist, dass gemäß Gleichung (5) Spannungen, Ströme und sämtliche Matrizen in die Form von symmetrischen Komponenten überführt worden sind. Die Spannungsübersetzungsmatrix $T^{(ABC)}$ nimmt die Form einer komplexen diagonalen Matrix an:

$$\underline{T}^{(012)} = \begin{bmatrix} 1 & 0 & 0 \\ 0 & \underline{t} & 0 \\ 0 & 0 & \underline{t}^* \end{bmatrix} , \quad \underline{t} = t \cdot e^{ja}$$

Hierin sind sowohl die Amplitudenverschiebung als auch die Phasenwinkelverschiebung $\alpha$ enthalten, die durch die Schaltgruppe erzeugt werden. Dies ist der einzige Parameter, der zur Beschreibung der Schaltgruppe notwendig ist.

Für die folgenden Ausführungen sei nun angenommen, dass eine Transformatoranordnung in Form einer Transformatorbank, bestehend aus drei unterschiedlichen Einzeltransformatoren mit jeweils bekannten Impedanz-/Admittanzparametern modelliert werden soll. Die Schaltgruppe dieser Transformatoranordnung sei YD5. Da bei einer Transformatorbank konstruktionsbedingt in den reinen Admittanzmatrixen in Phasenkoordinaten keinerlei Kopplungen auftreten, besteht das Modell aus

- drei Übertragungsimpedanzen (Transformator-Admittanz-Netzwerk 20; siehe Figur 2), bezogen auf Seite 1 der Transformatoranordnung,
- einem idealen Transformatornetzwerk 21 und
- einem Erdungsnetzwerk 22.

Die Admittanzmatrixen des Transformator-Admmittanz-Netzwerks sind gegeben durch Gleichung (7):

$$\underline{Y}_{11}^{(ABC)} = \underline{Y}_{22}^{(ABC)} = \begin{bmatrix} \underline{Y}_A & 0 & 0 \\ 0 & \underline{Y}_B & 0 \\ 0 & 0 & \underline{Y}_C \end{bmatrix} = -\underline{Y}_{12}^{(ABC)} = -\underline{Y}_{21}^{(ABC)} \qquad (7)$$

Die genaue Form der Spannungsübersetzungsmatrix $T^{(ABC)}$ ist nicht von Bedeutung; die einzige benötigte Information ist, dass sie entsprechend der Schaltgruppe YD5 eine Phasenverschiebung der Phase-Erde-Spannungen um 5*30° vornimmt.

Im nächsten Schritt wird die Admittanzmatrix $\underline{Y}_{ij}^{(ABC)}$ in durch die Matrix $\underline{T}_{p2s}$ (p2s - phase to symmetric = phasenbezogen zu symmetrisch) symmetrische Komponenten überführt:

$$\underline{Y}_{ij}^{(012)} = \underline{T}_{p2s} \; \underline{Y}_{ij}^{(ABC)} \; \underline{T}_{p2s}^{-1} \qquad (8)$$

$$\underline{Y}_{ij}^{(012)} = \frac{1}{3}\begin{bmatrix} 1 & 1 & 1 \\ 1 & \underline{a} & \underline{a}^2 \\ 1 & \underline{a}^2 & \underline{a} \end{bmatrix} \begin{bmatrix} \underline{Y}_A & 0 & 0 \\ 0 & \underline{Y}_B & 0 \\ 0 & 0 & \underline{Y}_C \end{bmatrix} \begin{bmatrix} 1 & 1 & 1 \\ 1 & \underline{a}^2 & \underline{a} \\ 1 & \underline{a} & \underline{a}^2 \end{bmatrix}$$

$$= \frac{1}{3}\begin{bmatrix} \underline{Y}^{(d)} & \underline{Y}^{(1)} & \underline{Y}^{(2)} \\ \underline{Y}^{(2)} & \underline{Y}^{(d)} & \underline{Y}^{(1)} \\ \underline{Y}^{(1)} & \underline{Y}^{(2)} & \underline{Y}^{(d)} \end{bmatrix} \qquad (9)$$

mit:

$$\underline{Y}^{(d)} = \frac{1}{3}\left(\underline{Y}_A + \underline{Y}_B + \underline{Y}_C\right)$$

$$\underline{Y}^{(1)} = \frac{1}{3}\left(\underline{Y}_A + \underline{a}^2\underline{Y}_B + \underline{a}\underline{Y}_C\right)$$

$$\underline{Y}^{(2)} = \frac{1}{3}\left(\underline{Y}_A + \underline{a}\underline{Y}_B + \underline{a}^2\underline{Y}_C\right)$$

In symmetrischen Komponenten besitzen die Matrizen nur dann eine diagonale Form, wenn die Admittanzen in den drei Phasen gleich sind. Allerdings ist die Matrix in symmetrischen Komponenten zyklisch symmetrisch und es müssen nur drei Elemente der Matrix berechnet werden (siehe Gleichung (9)), wodurch sich eine deutliche Vereinfachung ergibt.

Eine Umsetzung der fertig berechneten Modellierung für die Transformatoranordnung von der Darstellung in symmetrischen Komponenten in eine phasenbezogene Darstellung erfolgt entsprechend in umgekehrter Weise.

Figur 3 gibt schließlich ein Beispiel einer Modellierung einer Transformatoranordnung mit einer Schaltgruppe YD in symmetrischen Komponenten an.

**Patentansprüche**

1.  Verfahren zur Modellierung einer Transformatoranordnung eines elektrischen Energieversorgungsnetzes, bei dem folgende Schritte durchgeführt werden:

    - Erzeugen einer zumindest eine Admittanzmatrix umfassenden Kopplungsmatrix aus Admittanzparametern der Transformatoranordnung, wobei die Kopplungsmatrix, die Admittanzmatrix und die Admittanzparameter in symmetrischen Komponenten eines Dreiphasensystems dargestellt werden;
    - Berechnen der Modellierung der Transformatoranordnung in symmetrischen Komponenten des Dreiphasensystems, wobei die Modellierung eine mathematische Beschreibung der Abhängigkeit von Strömen und Spannungen auf beiden Seiten der Transformatoranordnung angibt; und
    - Umsetzung der auf die symmetrischen Komponenten des Dreiphasensystems bezogenen Modellierung der Transformatoranordnung in eine jeweils auf die einzelnen Phasen des Dreiphasensystems bezogene Modellierung der Transformatoranordnung.

2.  Verfahren nach Anspruch 1,
    **dadurch gekennzeichnet, dass**

    - zur Bestimmung der auf symmetrische Komponenten des Dreiphasensystems bezogenen Admittanzparameter der Transformatoranordnung die auf die einzelnen Phasen des Dreiphasensystems bezogenen Admittanzparameter der Transformatoranordnung ermittelt und in die auf die symmetrischen Komponenten des Dreiphasensystems bezogenen Admittanzparameter umgesetzt werden.

3.  Verfahren nach Anspruch 1 oder 2,
    **dadurch gekennzeichnet, dass**

    - die Modellierung für eine Transformatorbank, einen unsymmetrisch belasteten Transformator oder einen unvollständig belegten 3-Phasen-Transformator durchgeführt wird.

4.  Datenverarbeitungseinrichtung zur Modellierung einer Transformatoranordnung eines elektrischen Energieversorgungsnetzes, die dazu eingerichtet ist, ein Verfahren gemäß der Patentansprüche 1 bis 3 auszuführen.

# FIG 1

11

Admittanzparameter
(symmetrische Komponenten)

13

Admittanzparameter
(phasenbezogene Komponenten)

Umsetzung in
symmetrische Komponenten

14

Erzeugung der Kopplungsmatrix
in symmetrischen Komponenten — 12

Berechnung der Modellierung
in symmetrischen Komponenten — 15

Umsetzung der Modellierung in
phasenbezogene Komponenten — 16

## FIG 2

## FIG 3